# EUROPÄISCHE PATENTSCHRIFT

(11) **EP 0 406 576 B1**
(45) Veröffentlichungstag und Bekanntmachung des Hinweises auf die Patenterteilung: **12.07.1995**
(21) Anmeldenummer: 90110773.0
(22) Anmeldetag: 07.06.1990
(51) Int. Cl.: G06K 15/12, G03B 27/00, G06K 19/04, G06K 15/22

(54) **Verfahren zum Speichern von Zeichnungsdaten mittels eines CAD-Filmkarten-Laserplotters sowie Mikrofilmkarte und CAD-Filmkarten-Laserplotter zu seiner Durchführung**
Method for memorising data of drawings by use of a CAD laser plotter for film cards and microfilm card/film card laser plotter to carry out this method
Procédé de mémorisation de données de dessin à l'aide d'un traceur CAD à laser pour des cartes à film et traceur à laser pour des cartes à film/microfilm pour la mise en oeuvre de ce procédé

(30) Priorität: 04.07.1989 DE 3921905; 17.10.1989 DE 3934565
(43) Veröffentlichungstag der Anmeldung: 09.01.1991
(73) Patentinhaber: Microbox Dr. Welp GmbH, D-61231 Bad Nauheim (DE)
(72) Erfinder: Welp, Ulrich, Dr., D-6350 Bad Nauheim (DE); Welp, Stephan, D-6380 Bad Homburg (DE); Hossu, Dan, D-6300 Giessen (DE)
(74) Vertreter: Schlagwein, Udo, Dipl.-Ing.

(56) Entgegenhaltungen:
- DE-A- 3 338 800
- FR-A- 2 017 458
- US-A- 4 106 062
- US-A- 4 634 269

## Beschreibung

Die Erfindung betrifft ein Verfahren zum Abspeichern von Zeichnungen einer CAD-Zeichenanlage mittels eines CAD-Filmkarten-Laserplotters, bei dem die Zeichnungen, die aus im Vektor- oder Pixelformat vorliegenden CAD-Daten aufgebaut werden, auf einem Film einer Mikrofilmkarte optisch gespeichert werden. Weiterhin betrifft die Erfindung eine Mikrofilmkarte und einen CAD-Filmkarten-Laserplotter zur Durchführung dieses Verfahrens.

Um bestehende CAD-Zeichnungen, die auf Mikrofilm abgespeichert werden, zu ändern, ist es notwendig, die der Zeichnung zugehörigen CAD-Daten, die entweder im Vektor- oder Pixelformat vorliegen, in den Arbeitsspeicher der CAD-Anlage zu laden. Da diese Daten im Gegensatz zu den fertigen CAD-Zeichnungen aber auf magnetischen Speichermedien oder optischen Speicherplatten digital abgelegt werden, müssen bisher für die Langzeitablage der CAD-Zeichnungen zwei Archive geführt werden: Ein Filmkartenarchiv enthält die graphische Darstellung der Zeichnungen und wird mit Lese- und Vergrößerungsgeräten ausgewertet. Zusätzlich ist ein digitales Band- oder Plattenarchiv zu führen, welches die kompletten binären CAD-Daten enthält und zum "Wiedereinspielen" der digitalen Daten für die CAD-Änderungskonstruktionen in den Arbeitsspeicher dient. Dieses Führen von zwei Archiven/Dateien ist hinsichtlich Organisation und Kosten aus mehreren Gründen außerordentlich aufwendig. So erfordert zum Beispiel das Erhalten der digitalen Daten auf Magnetbändern oder Speicherplatten eine häufige "Auffrischung", damit die Daten einwandfrei erhalten bleiben. Auch erfordert die Pflege der digitalen Daten der verschiedenen Änderungszustände von Zeichnungen über einen längeren Zeitraum einen erheblichen Aufwand. Sie macht das Führen einer zusätzlichen Datenbank notwendig und birgt durch den schnellen Wechsel von Hard- und Softwaresystemen großes wirtschaftliches Risiko in sich.

Bei Mikrofilmkarten ist es bekannt, zusätzlich zum Filmbild einen Magnetstreifen vorzusehen, auf dem zum Filmbild gehörende, zusätzliche Daten abgespeichert sind. Bekannt ist es auch, auf einem Filmbild eine Codierung vorzusehen, die maschinenlesbare Daten für die Identifizierung und Klassifizierung der Zeichnung enthält. Gemeinsam ist solchen zusätzlichen Speicherfeldern auf Mikrofilmkarten, daß sie zum Abspeichern von Daten dienen, die dem organisatorischen Auswerten der Kartenarchive dienlich sind, zum Beispiel Sortieren oder Selektieren der Karten. Durch die DE-A-33 38 800 ist weiterhin bekannt, zwei Filmfenster auf einer Mikrofilmkarte so anzuordnen, daß beide gleichzeitig von dem Projektionslicht durchleuchtet werden können, wobei ein Fenster das Mikrofilmbild enthält, das andere ebenfalls transparent ist und zusätzliche Informationen zum Bild, wie z.B eine Unterschrift, enthält.

Zum Abspeichern von CAD-Zeichnungen sind CAD-Filmkarten-Laserplotter gebräuchlich, welche eine Laserbelichtungsstation, eine Entwicklungsstation, eine Beschriftungsstation und eine Duplizierstation aufweisen. Ein solcher CAD-Filmkarten-Laserplotter ist beispielsweise in Figur 3 der EP-A-0 171 572 dargestellt und in der Schrift erläutert. Der bekannte CAD-Filmkarten-Laserplotter ermöglicht es, mit Hilfe des Laserstrahls, welcher durch die der Zeichnung entsprechenden Vektor- oder Pixeldaten gesteuert wird, den Film der Filmkarte zu belichten, den Film sofort zu entwickeln und die Filmkarte zu beschriften. Weiterhin ermöglicht der CAD-Filmkarten-Laserplotter die erstellten Original-Filmkarten sofort auf Silberfilmkarten zu duplizieren, wozu die gleiche Beschriftungs- und Entwicklungseinrichtung eingesetzt wird wie für die Original-Filmkarten.

Der Erfindung liegt die Aufgabe zugrunde, ein Verfahren zum Abspeichern von Zeichnungen zu entwickeln, welches ein rasches Benutzen einer Mikrofilmkarte sowohl in Lese- oder Vergrößerungsgeräten ermöglicht, als auch ein Wiedereinlesen der die Zeichnung bestimmenden binären CAD-Daten in eine CAD-Zeichenanlage. Weiterhin sollen eine Mikrofilmkarte und ein CAD-Filmkarten-Laserplotter zur Durchführung dieses Verfahrens geschaffen werden.

Die erstgenannte Aufgabe wird erfindungsgemäß dadurch gelöst, daß die der Zeichnung entsprechenden computergerechten, binären CAD-Daten (CAD-Modelldaten) zusätzlich auf einem Film eines zweiten Filmfensters der Filmkarte digital abgespeichert werden.

Durch diese Verfahrensweise ist die Mikrofilmkarte optimal sowohl für die grafische Auswertung in Lese- und Vergrößerungsgeräten als auch für die Wiedereingabe der CAD-Daten in die CAD-Zeichenanlage geeignet. Deshalb kann nach dem Abspeichern der Daten auf der Mikrofilmkarte auf eine magnetische Datenspeicherung verzichtet werden. Auch ergibt sich eine wesentlich größere Sicherheit gegen einen Datenverlust. Auf dem Silberfilm der Mikrofilmkarte sind die Daten über viele Jahrzehnte ohne jede Datenpflege zuverlässig gespeichert und können bei Bedarf schnell in eine CAD-Zeichenanlage eingelesen werden.

Die zweitgenannte Aufgabe, nämlich die Schaffung einer nach dem erfindungsgemäßen Verfahren hergestellten Mikrofilmkarte, wird erfindungsgemäß dadurch gelöst, daß die Filmfenster symmetrisch zueinander nahe beider Schmalseiten der Mikrofilmkarte angeordnet sind und daß auf dem nicht die Zeichnung zeigenden Filmbereich die der Zeichnung entsprechenden computergerechten, binären CAD-Daten digital abgespeichert sind. Eine solche Mikrofilmkarte kann wie übliche Filmkarten in einem Mikrofilmlesegerät oder einem Vergrößerungsgerät zum Vergrößern der Zeichnung, zusätzlich jedoch zum Wiedereinlesen computergerechter Daten mittels einer Lesevorrichtung in eine CAD-Zeichenanlage benutzt werden. Dadurch, daß die Mikrofilmkarte ähnlich wie die bisher bekannten Mikrofilmkarten aufgebaut ist, kann sie zusätzlich Klartext auf Karton aufweisen, so daß sie vom Benutzer auch ohne maschinelle Hilfsmittel identifiziert werden kann.

Ein CAD-Filmkarten-Laserplotter zur Durchführung des erfindungsgemäßen Verfahrens zeichnet sich dadurch aus, daß die Laserbelichtungsstation, die Entwicklungsstation und die Duplizierstation jeweils zum Einwirken auf in zwei verchiedenen Filmfenstern der Mikrofilmkarte vorgesehenen Filmstücken ausgebildet sind und daß die Laserbelichtungsstation zum Aufbelichten der computergerechten, binären CAD-Daten auf den Film eines für binäre Daten bestimmten Filmfensters der Mikrofilmkarte und zusätzlich zum Aufbelichten der aus den CAD-Daten resultierenden Zeichnung auf den Film eines für Grafik bestimmten Filmfensters der Mikrofilmkarte gestaltet ist.

Mit einem solchen CAD-Filmkarten-Laserplotter lassen sich auf einfache Weise und sehr rasch Mikrofilmkarten erzeugen, welche ein Filmfenster mit einer üblichen Zeichnungsdarstellung und ein Filmfenster mit den zur Erzeugung der Zeichnung benutzen binären CAD-Daten aufweist. Dann kann man zum Wiedereinlesen der Daten mittels einer Lesevorrichtung den Film mit den binären CAD-Daten benutzen.

Computergesteuerte Laserstrahleinrichtungen zum Belichten eines Filmes sind relativ teuer in der Anschaffung. Auf den Einsatz von jeweils zwei Laserstrahleinrichtungen für CAD-Filmkarten-Laserplotter kann verzichtet werden, wenn gemäß einer vorteilhaften Ausgestaltung der Erfindung die Laserbelichtungsstation eine einzige, computergesteuerte Laserstrahleinrichtung zum Belichten des für die binären CAD-Daten bestimmten Filmfensters und des für Grafik bestimmten Filmfensters aufweist und wenn der CAD-Filmkarten-Laserplotter eine Transporteinrichtung zum Transport der Mikrofilmkarten zunächst mit dem für Daten bestimmten Filmfenster und nach dem Belichten dieses Filmfensters mit dem für Grafik bestimmten Filmfenster in die Laserbelichtungsstation hat. Da die CAD-Daten in der CAD-Zeichenanlage unmittelbar zur Verfügung stehen, ist es sinnvoll, diese zuerst auf den Mikrofilm zu belichten und erst danach nach dem Umwandeln der CAD-Daten in die entsprechende Zeichnung den Film des für Grafik bestimmten Filmfensters zu belichten.

Wenn man die binären CAD-Daten von Zeichnungen auf MikroFilm speichert, kann man auf ein Speichern dieser Daten in Magnetspeichern oder optischen Speicherplatten verzichten. Das setzt jedoch eine Kontrolle der Abspeicherung auf dem Film voraus. Die Abspeicherung der CAD-Daten im dazu bestimmten Filmfenster kann auf einfache Weise überprüft werden, wenn gemäß einer vorteilhaften Ausgestaltung der Erfindung die Laserbelichtungsstation einen Lesekopf zum Lesen der auf dem Film des für die binären CAD-Daten bestimmten Filmfensters belichteten Informationen aufweist. Der CAD-Mikrofilmplotter muß dann die fertige Filmkarte von der Entwicklungsstation zurück zur Laserbelichtungsstation transportieren. Der Lesekopf vergleicht dann die Daten des für Daten bestimmten Filmfensters mit den im Computer befindlichen, die Laserstrahleinrichtung steuernden CAD-Daten.

Die Kontrolle der Abspeicherung könnte jedoch auch durch einen Teststreifen auf dem Film erfolgen, der in einer Prüfstation zwischen der Entwirkungs- und der Beschriftungsstation geprüft wird.

Besonders einfach ist die Einrichtung zum Überprüfen der Mikrofilmkarten gestaltet, wenn der Lesekopf auf der der Laserstrahleinrichtung gegenüberliegenden Seite der Mikrofilmkarte angeordnet ist. Die entwickelte Filmkarte kann dann vom Laserstrahl abgetastet und die dabei vom Lesekopf gelesenen Informationen anschließend im Computer mit den ursprünglichen Daten verglichen werden.

Die binären CAD-Daten können ähnlich wie auf einer Diskette auf dem Mikrofilm gespeichert werden, so daß auch ein Wiederauffinden auf vergleichbare Weise erfolgen kann, wenn die Laserstrahleinrichtung zur Spurmarkierung in Bewegungsrichtung der Mikrofilmkarte und/oder rechtwinklig dazu und zum zeilenweisen Aufbringen der Informationen rechtwinkig zur Bewegungsrichtung der Mikrofilmkarte ausgebildet ist.

Der CAD-Filmkarten-Laserplotter arbeitet besonders schnell, wenn die Entwicklungsstation und die Duplizierstation zum gleichzeitigen Behandeln des Filmes beider Filmfenster der Mikrofilmkarte ausgebildet sind.

Der Erfindung läßt zahlreiche Ausführungsformen zu. Zur weiteren Verdeutlichung ihres Grundprinzips ist eine davon in der Zeichnung dargestellt. Die Zeichnung zeigt in
- Fig. 1:: eine Draufsicht auf eine erfindungsgemäße Mikrofilmkarte,
- Fig. 2:: eine perspektivische Darstellung eines erfindungsgemäßen CAD-Filmkarten-Laserplotters.

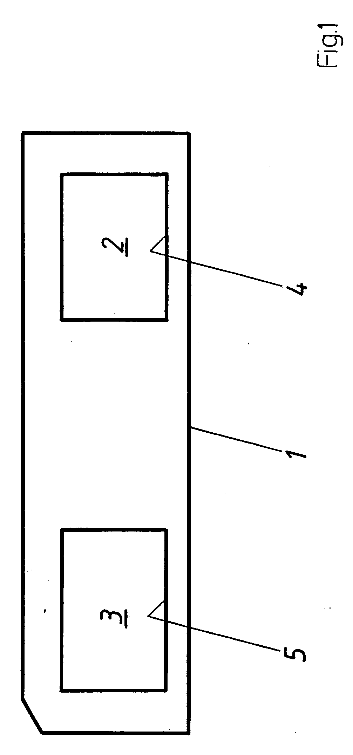

Die in Figur 1 gezeigte Mikrofilmkarte 1 besteht aus Kartonpapier und hat zwei Filmbereiche 2, 3, welche jeweils durch einen in ein Filmfenster 4, 5 eingesetzten, fotografischen Film gebildet sind. Die Mikrofilmkarte 1 kann eine übliche, mit Klarschrift beschriftete Kopzeile aufweisen. Der Bereich über, zwischen und unter den Filmfenstern 4, 5 kann ebenfalls für eine Beschriftung mit Klartext benutzt werden.

Wichtig für die Erfindung ist, daß ein Filmbereich, beispielweise der Filmbereich 2 für die CAD-Zeichnung und der andere Filmbereich 3 für die dazugehörigen binären CAD-Daten, bestimmt ist. Auf dem Filmbereich 2 ist deshalb beispielsweise eine übliche Zeichnung für einen Mikrofilm wiedergegeben, so daß dieser Filmbereich zum Lesen oder Vergrößern genutzt werden kann.

Will man die bei der Erzeugung der Zeichnung entstandenen CAD-Daten wieder in eine CAD-Zeichenanlage mit Hilfe einer Lesevorrichtung einlesen, dann benutzt man hierzu den anderen Filmbereich 3. Da auf ihm die binären CAD-Daten in Form von Punkten oder Strichen abgebildet sind, bereitet das Wiedereinlesen keine Schwierigkeiten und ist in äußerst kurzer Zeit fehlerfrei möglich.

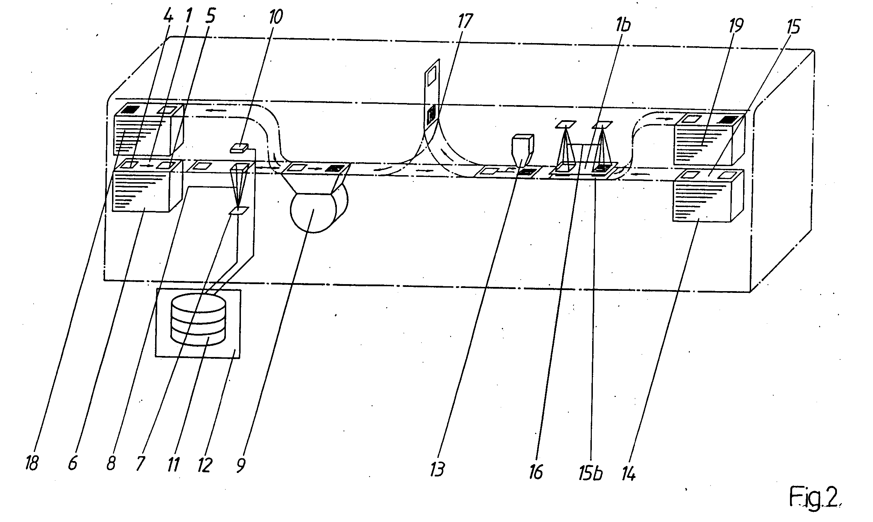

Der in Figur 2 dargestellte CAD-Filmkarten-Laserplotter hat ein Originalkartenmagazin 6, von dem aus die unbelichteten Mikrofilmkarten 1 zu einer Laserbelichtungsstation 7 transportiert werden. Von der Mikrofilmkarte 1 sind die zwei Filmfenster 4, 5 gezeigt, von denen jeweils ein Filmfenster 5 (Datenfenster) zum Aufbelichten von CAD-Daten und ein Filmfenster 4 (Grafikfenster) zum Aufbelichten der zugehörigen Daten in Vektor- oder Pixelformat bestimmt ist. Die Mikrofilmkarten 1 weisen im CAD-Filmkarten-Laserplotter mit der entgegengesetzten Seite wie in Figur 1 nach oben. Das Aufbelichten der Daten erfolgt mittels einer Laserstrahleinrichtung 8 in der Laserbelichtungsstation 7 derart, daß nacheinander das Filmfenster 5 und das Filmfenster 4 positioniert und belichtet werden.

Nach dem Belichten wird die Mikrofilmkarte 1 zu einer Entwicklungsstation 9 befördert. Diese ist als Doppel-Entwicklungsstation ausgebildet und vermag den Film beider Filmfenster 4, 5 gleizeitig zu entwickeln.

Nach dem Entwickeln läuft die Mikrofilmkarte 1 zurück zur Laserbelichtungsstation 7. Dort ist auf der der Laserstrahleinrichtung 8 gegenüberliegenden Seite der Mikrofilmkarte 1 ein Lesekopf 10 vorgesehen. Dieser ist mit einem einen Datenspeicher 11 aufweisenden Computer 12 verbunden, der beim Aufbelichten der Daten die Laserstrahleinrichtung 8 steuert. In diesem Computer 12 werden die gelesenen Daten des Filmfensters 5 mit den ursprünglichen, die Laserstrahleinrichtung 8 steuernden Daten verglichen. Stimmen diese überein, dann sind alle Daten ordnungsgemäß auf der Mikrofilmkarte 1 gespeichert.

Die geprüfte Mikrofilmkarte 1 wird von der Laserbelichtungsstation 7 einer Druckstation 13 zugeführt, wo sie mit maschinenlesbaren Identifikationsdaten beschriftet wird.

Der CAD-Filmkarten-Laserplotter ermöglich es auch, Duplikatkarten herzustellen. Hierzu hat er ein Duplikatkartenmagazin 14 mit Duplikatkarten 15, die im Aufbau den Original-Mikrofilmkarten 1 entsprechen, jedoch mit Silber-Duplizierfilm bestückt sind. Die Dublikatkarten 15 gelangen zu einer Duplizierstation 16, wo sie unter die zu duplizierende Mikrofilmkarte 1b gelangen und in der beide Filmfenster 4, 5 gleichzeitig im Kontaktbelichtungsverfahren belichtet werden.

Während die Original-Mikrofilmkarte 1b in der Duplizierstation 16 bleibt, bis die gewünschte Duplikatzahl belichtet wurde, werden die belichteten Duplikatkarten 15b jeweils in umgekehrter Richtung der Druckstation 13 zugeführt, wo sie in gleicher Weise wie die Original-Mikrofilmkarten 1 beschriftet werden.

Beim Kontaktbelichten weist die Schichtseite der Duplikatkarten 15b nach oben. Diese muß jedoch beim Entwickeln in den Entwicklungsstation 9 nach unter weisen, damit sie chemisch behandelt werden kann. Deshalb ist zwischen der Druckstation 13 und der Entwickungsstation 9 eine Wendestation 17 vorgesehen. Nach dem Entwickeln der Duplikatkarten 15, 15b werden diese zu einer Duplikatkartenablage 18 oberhalb des Originalkartenmagazins 6 befördert. Die Original-Mikrofilmkarten 1 gelangen zu einer Originalkartenablage 19 an der entgegengesetzten Seite des CAD-Mikrofilm-Laserplotters.

### Bezugszeichenliste

- 1: Mikrofilmkarte
- 2: Filmbereich
- 3: Filmbereich
- 4: Filmfenster
- 5: Filmfenster

- 6: Originalkartenmagazin
- 7: Laserbelichtungsstation
- 8: Laserstrahleinrichtung
- 9: Entwicklungsstation
- 10: Lesekopf

- 11: Datenspeicher
- 12: Computer
- 13: Druckstation
- 14: Duplikatkartenmagazin
- 15: Duplikatkarte

- 16: Duplizierstation
- 17: Wendestation
- 18: Duplikatkartenablage
- 19: Originalkartenablage

## Patentansprüche

1. Verfahren zum Abspeichern von Zeichnungen einer CAD-Zeichenanlage mittels eines CAD-Filmkarten-Laserplotters, bei dem die Zeichnungen, die aus im Vektor- oder Pixelformat vorliegenden CAD-Daten aufgebaut werden, auf einem Filmbereich (2) einer Mikrofilmkarte (1) optisch gespeichert werden, **dadurch gekennzeichnet,** daß die der Zeichnung entsprechenden computergerechten, binären CAD-Daten zusätzlich auf einem Film (3) eines zweiten Filmfensters (5) der Filmkarte (1) digital abgespeichert werden.

2. Mikrofilmkarte (1), hergestellt nach dem Verfahren gemäß Anspruch 1, welche zwei Filmfenster (4, 5) mit jeweils einem Filmbereich (2, 3) aufweist, wobei auf dem einen Filmbereich eine Zeichnung in Rasterdarstellung abgespeichert ist, **dadurch gekennzeichnet,** daß die Filmfenster (4, 5) symmetrisch zueinander nahe beider Schmalseiten der Mikrofilmkarte (1) angeordnet sind, und daß auf dem nicht die Zeichnung zeigenden Filmbereich (3) die der Zeichnung entsprechenden computergerechten, binären CAD-Daten digital abgespeichert sind.

3. CAD-Filmkarten-Laserplotter zur Durchführung des Verfahrens nach Anspruch 1 mit einer Laserbelichtungsstation (7), einer Entwicklungsstation (9), einer Druckstation (13) und einer Duplizierstation (16), **dadurch gekennzeichnet,** daß die Laserbelichtungsstation (7), die Entwicklungsstation (9) und die Duplizierstation (16) jeweils zum Einwirken auf in zwei verschiedenen Filmfenstern (4,5) der Mikrofilmkarte (1) vorgesehenen Filmstükken ausgebildet sind und daß die Laserbelichtungsstation (7) zum Aufbelichten der computergerechten, binären CAD-Daten auf den Film eines für binäre Daten bestimmten Filmfensters (5) der Mikrofilmkarte (1) und zusätzlich zum Aufbelichten der aus den CAD-Daten resultierenden Zeichnung auf den Film eines für Grafik bestimmten Filmfensters (4) der Mikrofilmkarte (1) gestaltet ist.

4. CAD-Filmkarten-Laserplotter nach Anspruch 3, **dadurch gekennzeichnet,** daß die Laserbelichtungsstation (7) eine einzige, computergesteuerte Laserstrahleinrichtung (8) zum Belichten des für die binären CAD-Daten bestimmten Filmfensters (5) und des für Grafik bestimmten Filmfensters (4) aufweist und daß der CAD-Filmkarten-Laserplotter eine Transporteinrichtung zum Transport der Mikrofilmkarten (1) zunächst mit dem für Daten bestimmten Filmfenster (5) und nach dem Belichten dieses Filmfensters (5) mit dem für Grafik bestimmten Filmfenster (4) in die Laserbelichtungsstation (7) hat.

5. CAD-Filmkarten-Laserplotter nach den Ansprüchen 3 oder 4, **dadurch gekennzeichnet,** daß die Laserbelichtungsstation (7) einen Lesekopf (10) zum Lesen der auf dem Film des für die binären CAD-Daten bestimmten Filmfensters (5) belichteten Informationen aufweist und der CAD-Filmkarten-Laserplotter Rückführmittel zum Transport der Mikrofilmkarten (1) von der Entwicklungsstation (7) hat und daß der Lesekopf (10) zum Vergleich der die Laserstrahleinrichtung (8) steuernden Daten mit den gelesenen Daten mit dem die Laserstrahleinrichtung (8) steuernden Computer (12) verbunden ist.

6. CAD-Filmkarten-Laserplotter nach Anspruch 5, **dadurch gekennzeichnet,** daß der Lesekopf (10) auf der der Laserstrahleinrichtung (8) gegenüberliegenden Seite der Mikrofilmkarte (1) angeordnet ist.

7. CAD-Filmkarten-Laserplotter nach zumindest einem der vorangehenden Ansprüche, **dadurch gekennzeichnet,** daß die Laserstrahleinrichtung (8) zur Spurmarkierung in Bewegungsrichtung der Mikrofilmkarte (1) und/oder rechtwinklig dazu und zum zeilenweisen Aufbringen der Informationen rechtwinklig zur Bewegungsrichtung der Mikrofilmkarte (1) beweglich ausgebildet ist.

8. CAD-Filmkarten-Laserplotter nach zumindest einem der vorangehenden Ansprüche, **dadurch gekennzeichnet,** daß die Entwicklungsstation (9) und die Duplizierstation (16) zum gleichzeitigen Behandeln des Filmes des für die binären CAD-Daten vorgesehenen Filmfensters (5) und des für Grafik vorgesehenen Filmfensters (4) der Mikrofilmkarte (1) ausgebildet sind.

## Claims

1. Process for storing drawings from a CAD drawing system by means of a CAD film card laser plotter in which the drawings made up from CAD data existing in vector or pixel format are optically stored on a film region (2) of a microfilm card (1), characterised in that the computer-calculated binary CAD data corresponding to the drawing are additionally stored digitally on a film (3) of a second film window (5) of the film card (1).

2. Microfilm card (1), produced by the process according to claim 1, comprising two film windows (4, 5) with one respective film region (2, 3), a drawing being stored in a raster configuration on one film region, characterised in that the film windows (4, 5) are arranged symmetrically to one another close to the two narrow sides of the microfilm card (1) and in that the computer-calculated binary CAD data corresponding to the drawing are stored digitally on the film region (3) not showing the drawing.

3. CAD film card laser plotter for carrying out the process according to claim 1 with a laser exposure station (7), a developing station (9), a printing station (13) and a duplicating station (16), characterised in that the laser exposure station (7), the developing station (9) and the duplicating station (16) are designed in each case to act on portions of film provided in two different film windows (4, 5) of the microfilm card (1) and in that the laser exposure station (7) is designed for the exposure of the computer-calculated binary CAD data on the film of a film window (5) intended for binary data of the microfilm card (1) and additionally for the exposure of the drawing resulting from the CAD data on the film of a film window (4) of the microfilm card (1) intended for graphics.

4. CAD film card laser plotter according to claim 3, characterised in that the laser exposure station (7) has a single computer-controlled laser beam system (8) for the exposure of the film window (5) intended for binary CAD data and of the film window (4) intended for graphics and in that the CAD film card laser plotter has a conveying system for conveying the microfilm cards (1) initially with the film window (5) intended for data and, after exposure of this film window (5), with the film window (4) intended for graphics into the laser exposure station (7).

5. CAD film card laser plotter according to claims 3 or 4, characterised in that the laser exposure station (7) has a reading head (10) for reading the information exposed on the film of the film window (5) intended for binary CAD data and the CAD film card laser plotter has return means for conveying the microfilm cards (1) from the developing station (7) and in that the reading head (10) is connected to the computer (12) controlling the laser beam system (8) for comparing the data controlling the laser beam system (8) with the read data.

6. CAD film card laser plotter according to claim 5, characterised in that the reading head (10) is arranged on the side of the microfilm card (1) opposite the laser beam system (8).

7. CAD film card laser plotter according to at least one of the preceding claims, characterised in that the laser beam system (8) is designed so as to be movable in the direction of movement of the microfilm card (1) and/or at right angles thereto for track marking and at right angles to the direction of movement of the microfilm card (1) for applying the information in lines.

8. CAD film card laser plotter according to at least one of the preceding claims, characterised in that the developing station (9) and the duplicating station (16) are designed for the simultaneous treatment of the film of the film window (5) provided for the binary CAD data and of the film window (4) of the microfilm card (1) provided for graphics.

## Revendications

1. Procédé pour le stockage de dessins dans un appareil de dessin par CAO au moyen d'un traceur laser pour cartes à fenêtres de CAO dans lequel les dessins sont élaborés à partir de données CAO sous forme vectorielle ou sous forme de pixel et stockés optiquement sur une zone de film (2) d'une carte à fenêtre (1), caractérisé en ce que les données CAO binaires correspondants aux dessins et calculées par ordinateur, sont stockées en plus de façon numérique sur un film (3) d'une deuxième fenêtre d'éclairement (5) de la carte à fenêtre.

2. Carte à fenêtre (1) conçue pour la mise en oeuvre du procédé selon la revendication 1, comprenant deux fenêtres d'éclairement (4,5) avec chacune une zone de film (2,3) sur laquelle un dessin est stocké en représentation de trame, caractérisée en ce que les fenêtres (4,5) sont disposées symétriquement près des petits côtés de la carte à fenêtre, et en ce que les données CAO binaires calculées par ordinateur et correspondants au dessin, sont stockées de façon digitale sur la zone de film (3) ne montrant pas le dessin.

3. Traceur laser pour carte à fenêtre CAO pour la mise en oeuvre du procédé selon la revendication 1 avec un poste d'éclairement au laser (7), un poste de développement (9), un poste d'impression (13) et un poste de duplication (16), caractérisé en ce que le poste d'éclairement au laser (7), le poste de développement (9) et le poste de duplication (16) sont chacun conformés de façon à agir sur des pièces de film prévues dans deux fenêtres différentes (4,5) de la carte à fenêtre et caractérisé en ce que le poste d'éclairement au laser (7) est conçu pour éclairer les données CAO binaires numérisées par ordinateur sur le film d'une fenêtre (5) de la carte à fenêtre (1) définie pour les données binaires et additionnellement pour éclairer le dessin résultant des données CAO sur le film d'une fenêtre (4) de la carte à fenêtre définie pour le graphisme.

4. Traceur laser pour carte à fenêtre de CAO selon la revendication 3, caractérisé en ce que le poste d'éclairement au laser (7) présente un seul moyen à rayonnement laser commandé par ordinateur pour l'éclairement de la fenêtre de film (5) définie pour les données CAO binaires et de la fenêtre de film (4) définie pour le graphisme, et en ce que le traceur laser présente un dispositif de transport pour transporter dans la station d'éclairement (7) la carte à fenêtre (1) d'abord avec la fenêtre de film (5) définie pour les données et ensuite, après éclairement de cette fenêtre de film (5), avec la fenêtre de film (4) définie pour le graphisme.

5. Traceur laser de cartes à fenêtres de CAO selon l'une des revendications 3 ou 4, caractérisé en ce que le poste d'éclairement au laser (7) présente une tête de lecture (10) pour lire les informations éclairées sur le film de la fenêtre de film (5) définie pour les données CAO binaires, et en ce que le traceur laser comporte des moyens de retour pour le transport de la carte à fenêtre (1) depuis le poste de développement (9) et en ce que la tête de lecture (10) est reliée à l'ordinateur (12) commandant le moyen à rayonnement laser (8) pour comparer les données commandant le moyen de rayonnement laser avec les données qui sont lues.

6. Traceur laser pour cartes à fenêtres de CAO selon la revendication 5, caractérisé en ce que la tête de lecture (10) est disposée sur la face de la carte à fenêtre opposée à celle où se trouve le moyen de rayonnement laser (8).

7. Traceur laser pour cartes à fenêtres de CAO selon au moins l'une des revendications précédentes, caractérisé en ce que le dispositif de rayonnement laser (8) a son mouvement prévu pour le traçage de la carte à fenêtre dans la direction et/ou dans le direction perpendiculaire à celle du mouvement, et pour porter en lignes les informations dans la direction perpendiculaire à celle du mouvement.

8. Traceur laser pour cartes à fenêtres de CAO selon au moins une des revendications précédentes, caractérisé en ce que le poste de développement (9) et le poste de duplication (16) sont conformés pour traiter simultanément le film de la fenêtre (5) prévue pour les données CAO binaires et le film de la fenêtre (4) prévue pour le graphisme.
